# EUROPEAN PATENT APPLICATION

(11) **EP 4 512 522 A1**
(43) Date of publication of application: **26.02.2025**
(21) Application number: 22938405.2
(22) Date of filing: 18.04.2022
(51) Int. Cl.: B01J 23/22, B01D 53/86, B01J 37/04, B01J 37/08

(54) **DENITRATION CATALYST AND METHOD FOR PRODUCING SAME, AND DENITRATION METHOD**

(71) Applicant: The Chugoku Electric Power Co., Inc., Hiroshima-shi, Hiroshima 730-8701 (JP); Tokyo Metropolitan Public University Corporation, Shinjuku-ku Tokyo 163-0926 (JP)
(72) Inventor: KIYONAGA, Eiji, Hiroshima-shi, Hiroshima 730-8701 (JP); YOSHIDA, Kazuhiro, Hiroshima-shi, Hiroshima 730-8701 (JP); SAKOTANI, Sousuke, Hiroshima-shi, Hiroshima 730-8701 (JP); MORITA, Keiichiro, Hiroshima-shi, Hiroshima 730-8701 (JP); MURAYAMA, Toru, Hachioji-shi, Tokyo 192-0397 (JP); INOMATA, Yusuke, Hachioji-shi, Tokyo 192-0397 (JP)
(74) Representative: HGF
(86) International application number: PCT/JP2022/018035
(87) International publication number: WO 2023/203602

(57) **Abstract**

The purpose of the present invention is to provide a denitration catalyst that exhibits an excellent denitration ratio at a lower temperature and in the presence of water vapor and SO₂ in a selective catalytic reduction reaction using ammonia as a reducing agent. Provided is a denitration catalyst comprising vanadium oxide and a second metal, in which vanadium oxide is contained in the denitration catalyst in an amount of 50% by mass or more in terms of vanadium pentoxide content, and the second metal comprises at least any one selected from Mg and Ca and is contained at a molar ratio of 0.0091 or more and less than 0.16 relative to the amount of a V atom in vanadium oxide.

## Description

### TECHNICAL FIELD

The present invention relates to a denitration catalyst, a method for producing the same, and a denitration method.

### BACKGROUND ART

As one class of the pollutants exhausted to the atmosphere by combustion of fuel, nitrogen oxides (NO, NO₂, NO₃, N₂O, N₂O₃, N₂O₄, and N₂O₅) can be exemplified. Nitrogen oxides cause acid rain, ozone layer destruction, photochemical smog, and the like, and have serious influences on the environment and human body, and therefore, the treatment thereof has become an important problem.

As a technique for removing the nitrogen oxides, a selective catalytic reduction (NH₃-SCR) using ammonia (NH₃) as a reducing agent is known. As described in Patent Document 1, catalysts including titanium oxide as a carrier and a vanadium oxide supported thereon are widely used as the catalyst in the selective catalytic reduction. Titanium oxide is the best carrier due to low activity thereof against sulfur oxides and high stability.

On the other hand, although a vanadium oxide plays a major role in NH₃-SCR, the vanadium oxide oxidizes SO₂ to SO₃, and thus could not be supported on the catalyst in a content of about 1 wt% or more. In addition, in the conventional NH₃-SCR, since a catalyst in which vanadium oxide is supported on a titanium oxide carrier hardly reacts at a low temperature, it was unavoidable to use the catalyst at a high temperature of 350 to 400°C.

Thereafter, the present inventors found a denitration catalyst containing vanadium pentoxide in an amount of 43 wt% or more, having a BET specific surface area of 30 m²/g or more, and being used for denitration at 200°C or less (Patent Document 2).

### Citation List

### Patent Document

Patent Document 1: Japanese Unexamined Patent Application, Publication No. 2004-275852
Patent Document 2: PCT International Publication No. WO2018/047356

### DISCLOSURE OF THE INVENTION

### Problems to be Solved by the Invention

Although the denitration catalyst described in Patent Document 2 can achieve a preferable denitration ratio at 200°C or lower, since in many cases, water vapor and SO₂ coexist under the situation where the denitration catalyst is actually used, there was still room for improvement in the denitration ratio in the presence of water vapor and SO₂. As a result of diligent investigations for further improvement in the denitration catalyst disclosed in Patent Document 2, the present inventors have found a denitration catalyst capable of achieving a preferable denitration ratio particularly at 200°C or lower in the presence of water vapor and SO₂.

An object of the present invention is to provide a denitration catalyst having an excellent denitration ratio at a low temperature in the presence of water vapor and SO₂ in the selective catalytic reduction using ammonia as a reducing agent.

### Means for Solving the Problems

(1) The present invention relates to a denitration catalyst including a vanadium oxide and a second metal, in which the denitration catalyst includes the vanadium oxide in an amount of 50% by mass or more in terms of vanadium pentoxide, and the second metal is at least one of Mg or Ca and has a molar ratio of 0.0091 or more and less than 0.16 with respect to atom V in the vanadium oxide.
(2) The denitration catalyst as described in (1), including a V₂O₅ crystal phase.
(3) The denitration catalyst as described in (1) or (2), in which, in a diffuse reflectance UV-Vis spectrum normalized by the absorption intensity at 400 nm, a ratio of an absorption intensity at 400 nm to an absorption intensity at 700 nm (400 nm:700 nm) is 1:0.0498 to 1:0.14.
(4) A method for producing the denitration catalyst as described in any one of (1) to (3), including calcining a precursor containing the vanadium oxide and the second metal at 260 to 340°C.
(5) An exhaust gas denitration method, including contacting exhaust gas having a concentration of SO₂ of 1 ppm or more with the denitration catalyst as described in any one of (1) to (3) to perform a denitration reaction.

### Effects of the Invention

The present invention can provide a denitration catalyst achieving an excellent denitration ratio at a low temperature in the presence of water vapor and SO₂ in a selective catalytic reduction using ammonia as a reducing agent.

### BRIEF DESCRIPTION OF THE DRAWINGS

FIG. 1 is a graph showing a relationship between reaction temperatures and denitration ratios of denitration catalysts of Examples and Comparative Examples;
FIG. 2 is a graph showing a relationship between calcining temperatures and denitration ratios of a denitration catalyst of an Example;
FIG. 3 is a chart showing TG-DTA measurement results of a precursor of a denitration catalyst of an Example;
FIG. 4 is XRD charts showing a relationship between calcining temperatures and crystal phases of denitration catalysts;
FIG. 5 is a graph comparing denitration ratios in the presence of SO₂ of denitration catalysts of an Example and a Comparative Example;
FIG. 6 is a graph comparing denitration ratios in the presence of SO₂ and water vapor of denitration catalysts of an Example and a Comparative Example;
FIG. 7 is a graph comparing denitration ratios in the presence of SO₂ and water vapor of denitration catalysts of an Example and a Comparative Example;
FIG. 8 is a graph showing a relationship between SO₂ concentrations and denitration ratios of denitration catalysts of an Example and a Comparative Example;
FIG. 9 is a graph showing a relationship between denitration ratios and ratios of the second element to element V of denitration catalysts of Examples and Comparative Examples;
FIG. 10 is an XRD chart of denitration catalysts of Examples and Comparative Examples;
FIG. 11 is a graph showing a relationship between reaction temperatures and denitration ratios of denitration catalysts of an Example and a Comparative Example;
FIG. 12 is a graph normalized by diffuse reflectance UV-Vis spectra of denitration catalysts of Examples and a Comparative Example;
FIG. 13 is a graph obtained by collating results of FIG. 12 with results of FIG. 9; and
FIG. 14 is a graph comparing relative activities of denitration catalysts of Examples and Comparative Examples.

### PREFERRED MODE FOR CARRYING OUT THE INVENTION

### <Denitration Catalyst>

The denitration catalyst according to the present embodiment includes 50 mass% or more of a vanadium oxide in the denitration catalyst, in terms of vanadium pentoxide, and includes a second metal. The second metal is at least one of Mg or Ca. The denitration catalyst according to the present embodiment exhibits a high denitration ratio even in a low temperature environment, in the presence of water vapor, and in the presence of SO₂, as compared with a conventionally used denitration catalyst.

In the following description, the denitration ratio may be expressed as a NO conversion ratio. The NO conversion ratio is NO conversion ratio (%) = (NO concentration before denitration reaction - NO concentration after denitration reaction) / (NO concentration before denitration reaction) × 100 (1)

### (Vanadium Oxide)

Examples of the vanadium oxide used in the denitration catalyst according to the present embodiment include vanadium (II) oxide (VO), vanadium (III) trioxide (V₂O₃), vanadium(IV) tetraoxide (V₂O₄), and vanadium(V) pentoxide (V₂O₅). As the vanadium oxide, vanadium pentoxide is preferable. Atom V of vanadium pentoxide may have a valence of 5, 4, 3, or 2 during the denitration reaction.

The vanadium oxide is contained in the denitration catalyst in an amount of 50 wt% or more in terms of vanadium pentoxide. It is preferable that 60 wt% or more of vanadium pentoxide is included in the denitration catalyst.

### (Second Metal)

The second metal used in the denitration catalyst according to the present embodiment is at least one of Mg or Ca. By containing the second metal, the denitration catalyst containing a vanadium oxide as a main component can achieve a high denitration ratio in a low temperature environment, in the presence of water vapor, and in the presence of SO₂, as compared with a conventional denitration catalyst.

### [Content of Second Metal]

When vanadium(V) pentoxide (V₂O₅) is used as the vanadium oxide, the molar ratio of the second metal to vanadium(V) pentoxide (V₂O₅) is 0.0091 or more and less than 0.16, and more preferably 0.0091 to 0.14. The reason why the molar ratio of the second metal to vanadium(V) pentoxide (V₂O₅) is preferably 0.0091 or more and less than 0.16 is considered to be that by setting the molar ratio to the above-described molar ratio, the second metal and vanadium(V) pentoxide (V₂O₅) easily form a specific crystal phase, and this crystal phase contributes to a high denitration ratio particularly in a low temperature environment, in the presence of water vapor, and in the presence of SO₂.

### [Crystal Phase of Denitration Catalyst]

The crystal phase formed by the second metal and vanadium(V) pentoxide (V₂O₅) preferably includes a V₂O₅ crystal phase. On the other hand, for example, when the second metal is Ca, it is preferable that a Ca₂V₂O₆ crystal phase is not included.

### [Specific Surface Area of Denitration Catalyst]

The denitration catalyst is expected to have a greater number of reaction sites as the specific surface area of the catalyst increases, resulting in a higher denitration ratio. However, it is more important that the denitration catalyst according to the present embodiment not only has a large specific surface area but also contains the preferable crystal phase described above.

### [Calcining Temperature of Denitration Catalyst]

The denitration catalyst, the details of which will be described later, according to the present embodiment is obtained by, for example, calcining a precursor containing a vanadium oxide and a second metal. The temperature during the calcining is preferably 260 to 340°C, more preferably 280 to 320°C, and still more preferably 290 to 310°C.

By setting the calcining temperature of the denitration catalyst to 260°C or higher, desorption of oxalic acid contained in the precursor of the denitration catalyst is observed. It is considered that by setting the calcining temperature of the denitration catalyst to 340°C or lower, it is possible to suppress a decrease in the specific surface area due to calcining, and it is also possible to produce the denitration catalyst containing the V₂O₅ crystal phase, without containing the Ca₂V₂O₆ crystal phase.

### [Diffuse Reflectance UV-Vis Spectrum]

The ratio of V⁵⁺ and V⁴⁺ present in the denitration catalyst can be estimated from a diffuse reflectance UV-Vis spectrum, which can be measured by a known method. The absorption intensity at 400 nm of the diffuse reflectance UV-Vis spectrum corresponds to the amount of V⁵⁺ in the denitration catalyst. Similarly, the absorption intensity at 700 nm of the diffuse reflectance UV-Vis spectrum corresponds to the amount of V⁴⁺ in the denitration catalyst. Therefore, the ratio of the absorption intensity at 400 nm and the absorption intensity at 700 nm (400 nm:700 nm) in the diffuse reflectance UV-Vis spectrum, with the absorption intensities being normalized by the absorption intensity at 400 nm, can indicate a preferable proportion of V⁵⁺ and V⁴⁺ in the denitration catalyst. The ratio of the absorption intensity (400 nm:700 nm) is preferably 1:0.0498 to 1:0.14. The ratio of the absorption intensity (400 nm:700 nm) is more preferably 1:0.0498 to 1:0.12 and most preferably 1:0.0498 to 1:0.0996.

### (Other Substance)

The denitration catalyst according to the present embodiment may contain other substances as long as the effects of the present invention are not impaired. For example, the denitration catalyst according to the present embodiment preferably further contains carbon in addition to the above. It is considered that when the denitration catalyst contains carbon as an impurity, strain occurs in lines or planes in the crystal lattice in the above-described vanadium oxide crystal structure, and thereby a high denitration ratio in a low-temperature environment can be attained. The content of carbon is preferably 0.05 wt% or more and 3.21 wt% or less in the denitration catalyst. The carbon content is more preferably 0.07 wt% or more and 3.21 wt% or less. The carbon content is more preferably 0.11 wt% or more and 3.21 wt% or less. The carbon content is more preferably 0.12 wt% or more and 3.21 wt% or less. The carbon content is more preferably 0.14 wt% or more and 3.21 wt% or less. The carbon content is more preferably 0.16 wt% or more and 3.21 wt% or less. The carbon content is more preferably 0.17 wt% or more and 3.21 wt% or less. The carbon content is more preferably 0.70 wt% or more and 3.21 wt% or less.

### <Exhaust Gas Denitration Method >

The exhaust gas denitration method according to the present embodiment is a method for carrying out a denitration reaction by bringing the denitration catalyst into contact with the exhaust gas containing nitrogen oxides. As a specific method, a method known as a selective reduction catalytic reaction using anhydrous ammonia, ammonia water, or urea as the reducing agent can be used.

In the exhaust gas denitration method according to the present embodiment, the denitration reaction is preferably performed under the conditions at a reaction temperature of 350°C or lower. The present denitration reaction is preferable, because a high denitration ratio can be obtained even at a reaction temperature of 300°C or less. The present denitration reaction is preferable, because oxidation of SO₂ to SO₃ does not occur, when the reaction is carried out at a reaction temperature of 200°C or lower. The reaction temperature is more preferably 100 to 250°C, and still more preferably 160 to 200°C. The reaction temperature may be 80 to 150°C. Further, when a denitration catalyst consisting of vanadium(V) pentoxide (V₂O₅) alone as the denitration catalyst is used at a reaction temperature of 300°C or more, the catalyst itself is changed, that is, for example, the specific surface area is decreased, and thus the reaction temperature cannot be set to 300°C or more. The denitration catalyst according to the present embodiment including the second metal can maintain a high denitration ratio, even when the reaction temperature is set to 300°C or higher.

The exhaust gas denitration method according to the present embodiment can achieve a high denitration ratio even when the denitration reaction is performed under a water vapor atmosphere and a SO₂ atmosphere. The concentration of SO₂ in the denitration reaction may be, for example, 1 ppm or more, 2 ppm or more, 5 ppm or more, 15 ppm or more, 100 ppm or more, or 1,000 ppm or more.

### <Method for Producing Denitration Catalyst>

The denitration catalyst according to the present embodiment can be produced, for example, as follows. First, a precursor containing each component contained in the denitration catalyst is prepared. Vanadium oxide contained in the denitration catalyst is contained in the precursor as, for example, an aqueous solution of a vanadate. As the vanadate, ammonium metavanadate, magnesium vanadate, strontium vanadate, barium vanadate, zinc vanadate, lead vanadate, lithium vanadate, etc. may be used.

The second metal in the denitration catalyst is contained in the precursor by, for example, mixing a nitrate, a chloride, a sulfate, a chelate complex, a hydrate, an ammonium compound, a phosphate compound, or the like of the respective metals with the aqueous solution of vanadic acid. Examples of the chelate complex include complexes of oxalic acid, citric acid, or the like.

The prepared precursor solution of the denitration catalyst is evaporated to dryness to obtain a powder of the precursor of the denitration catalyst. The powder of the denitration catalyst is obtained by a calcining step of calcining the powder of the precursor at a predetermined temperature for a predetermined time. A honeycomb catalyst can be obtained by preparing a catalyst dispersion liquid in which the powder of the denitration catalyst obtained as described above is dispersed in a solvent containing a component such as a binder, repeating a step of immersing a known honeycomb molded body in the catalyst dispersion liquid and drying the dispersion liquid once or plural times, and then carrying out a calcining step of calcining the honeycomb molded body at a predetermined temperature for a predetermined time. In addition to the above, the honeycomb catalyst also can be obtained by preparing a concentrated solution obtained by concentrating the precursor solution of the denitration catalyst, repeating immersing a known honeycomb molded body in the concentrated solution and drying the solution once or plural times, and then carrying out a calcining step of calcining the obtained honeycomb molded body at a predetermined temperature for a predetermined time. As described above, the calcining temperature in the calcining step is preferably 260 to 340°C, more preferably 280 to 320°C, and still more preferably 290 to 310°C.

The present invention is not limited to the above-described embodiments, and modifications, improvements, and the like within the scope in which the object of the present invention can be achieved are included in the present invention.

### EXAMPLES

Hereinafter, the present invention will be specifically described with reference to Examples. The present invention is not limited by these Examples.

### <Preparation of Denitration Catalysts>

### (Example 1)

Ammonium vanadate (NH₄VO₃) and oxalic acid ((COOH)₂) were dissolved in pure water to synthesize a precursor complex solution. To this precursor complex solution, a nitrate of Ca as the second metal was added in an amount which satisfies Ca_{0.018}V₂O₅ as a composition formula and mixed to obtain a precursor solution of the denitration catalyst. The precursor solution was evaporated to dryness and calcined twice at a temperature of 300°C for 4 hours in the atmosphere to obtain a denitration catalyst of Example 1.

### (Examples 2 to 8 and Comparative Examples 1 to 4)

The denitration catalysts according to the Examples and the Comparative Examples were prepared in the same manner as in Example 1 except that the type and content (molar ratio to atom V) of the second metal were as shown in Table 1. In Table 1, "M" in "M(NO₃)₂·4H₂O" and "MₓV₂O₅" means an element of the second metal.

**[Table 1]**

| | Vanadium oxide | Second metal | | | MₓV₂O₅ |
|---|---|---|---|---|---|
| | Amount charged NH₄VO₃ (mmol) | Type | Amount charged M(NO₃)₂ • 4H₂O (mmol) | Molar ratio to atom V | |
| Example 1 | 43.85 | Ca | 0.5 | 0.0091 | 0.018 |
| Example 2 | 43.85 | Ca | 2.0 | - | - |
| Example 3 | 43.85 | Ca | 3.5 | 0.0667 | 0.13 |
| Example 4 | 43.85 | Ca | 5.0 | - | - |
| Example 5 | 43.85 | Ca | 7.0 | 0.1416 | 0.28 |
| Example 6 | 43.85 | Ca | 8.0 | 0.1578 | 0.32 |
| Example 7 | 43.85 | Ca | 10.0 | 0.1098 | 0.22 |
| Example 8 | 43.85 | Mg | 7.0 | 0.1416 | 0.28 |
| Comparative Example 1 | 43.85 | - | - | 0 | - |
| Comparative Example 2 | 43.85 | Ca | 14.6 | 0.26 | 0.52 |
| Comparative Example 3 | 43.85 | Sr | 7.0 | 0.1416 | 0.28 |
| Comparative Example 4 | - | W | - | 7.81 | 15.6 |

### [Type of Second Metal, Reaction Temperature, and NO Conversion Ratio (in the absence of SO₂)]

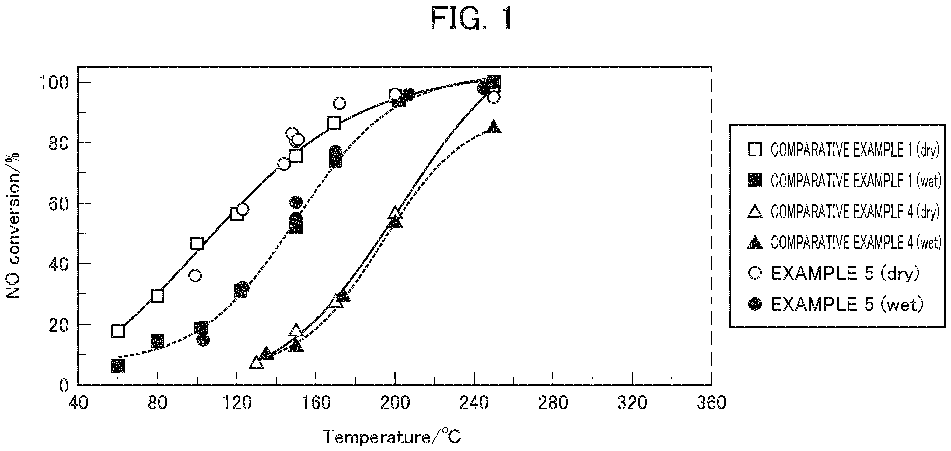

FIG. 1 is a graph showing a relationship between reaction temperature and NO conversion ratio of denitration catalysts according to Examples and Comparative Examples. The vertical axis of FIG. 1 represents the NO conversion ratio, and the horizontal axis of FIG. 1 represents the reaction temperature (°C). In the case of "Dry" in FIG. 1, Ar gas containing NO (250 ppm), NH₃ (250 ppm), and 4 vol% of O₂ was used, and the gas flow rate was set to 250 mL/min⁻¹. In the case of "Wet" in FIG. 1, the reaction gas of "Dry" further containing 10% by volume of H₂O was used as the reaction gas.

As shown in FIG. 1, it was confirmed that with the denitration catalyst according to Example 5, a NO conversion ratio equal to or higher than those of the denitration catalysts of Comparative Examples could be obtained under the condition of a low temperature in the presence of water vapor, even in the absence of SO₂.

### [Calcining Temperature of Denitration Catalyst]

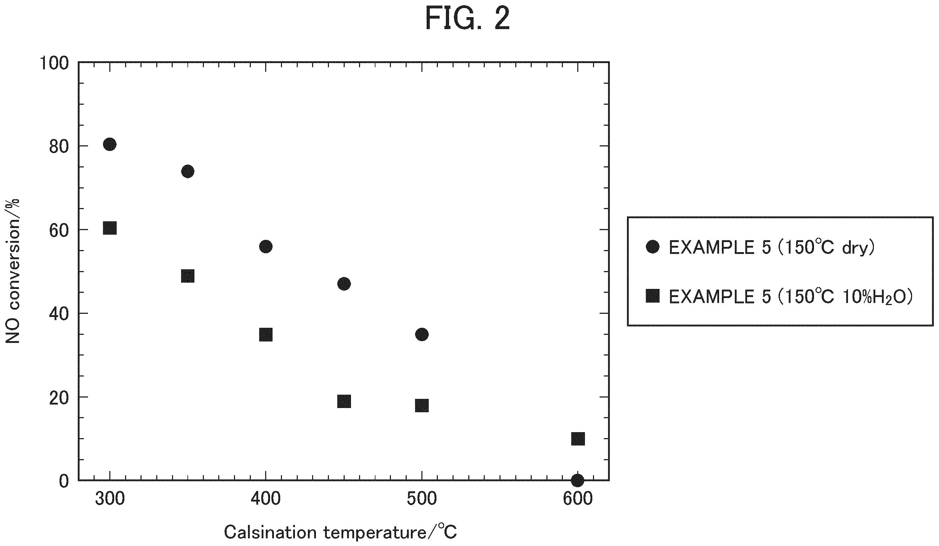

FIG. 2 is a graph showing a relationship between calcining temperature and NO conversion ratio of the denitration catalyst of Example 5. The vertical axis of FIG. 2 represents the NO conversion ratio and the horizontal axis of FIG. 2 represents the calcining temperature (°C) of the denitration catalyst. From FIG. 2, it is clear that the NO conversion ratio of the denitration catalyst is improved by setting the calcining temperature of the denitration catalyst to 340°C or lower.

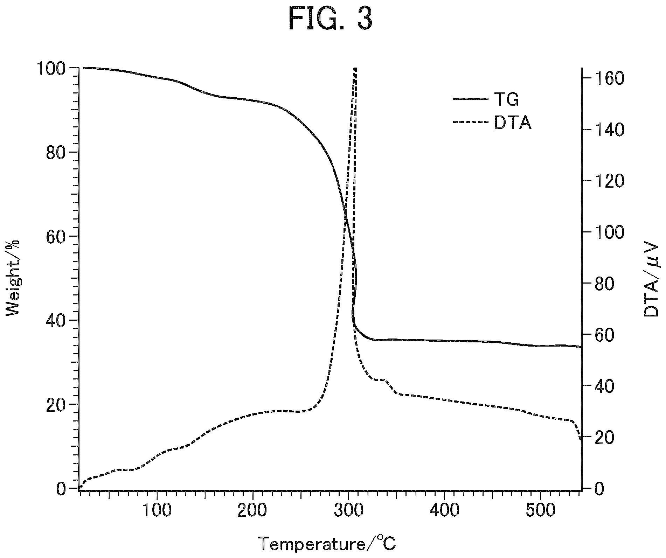

FIG. 3 is a chart showing TG-DTA measurement results of a precursor of the denitration catalyst of Example 3. The TG-DTA measurement was performed using TG/DTA7200 (manufactured by Hitachi High-Tech). 10 mg of the precursor before calcining of the denitration catalyst of Example 3 was set in an aluminum pan, and the temperature was raised at a temperature rise rate of 10°C/min under air flow to perform measurement. In FIG. 3, a solid line indicates a TG curve, and a broken line indicates a DTA curve. In FIG. 3, the horizontal axis represents the temperature (°C), the left vertical axis represents a weight change (%), and the right vertical axis represents a difference (differential heat amount: µV) in the heat amount of the measurement sample with respect to the reference substance. As shown in FIG. 3, the slope of the TG curve begins to increase at around 260°C, and an exothermic reaction is observed at around 300 to 340°C with a significant weight decrease. This suggests that oxalic acid contained in the precursor is eliminated and crystals are transferred to a Ca₂V₂O₆ crystal phase. Incidentally, since calcining is performed at a constant temperature for, for example, 4 hours when actually preparing the catalyst, there is a possibility that a denitration catalyst having a preferable NO conversion ratio can be produced even if the calcining temperature is lower than 300°C.

### [Crystal Phase of Denitration Catalyst]

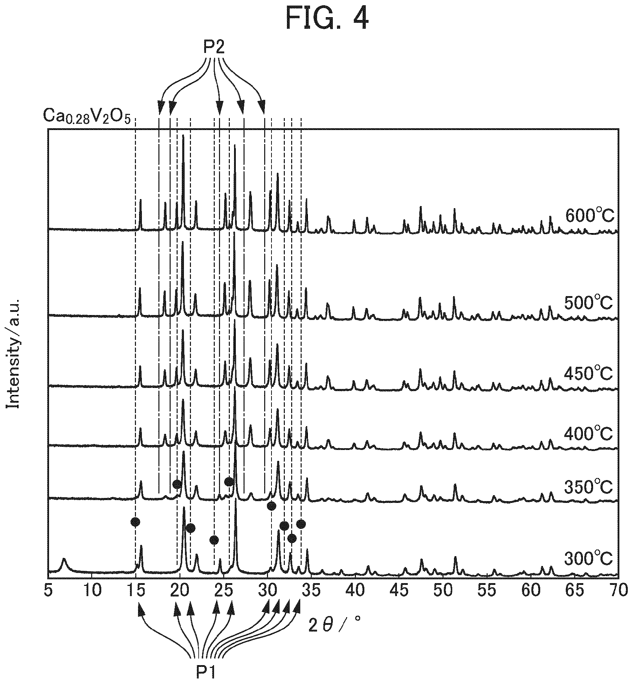

FIG. 4 is an XRD chart in the case where each denitration catalyst was produced by setting the calcining temperature of the denitration catalyst of Example 5 to the temperatures shown in FIG. 4. As shown in FIG. 4, peaks P1 observed regardless of the calcining temperature of the denitration catalyst are peaks derived from the V₂O₅ crystal phase. On the other hand, peaks observed when the calcining temperature of the denitration catalyst is increased to 350°C or higher are peaks derived from the CaV₂O₆ crystal phase. Therefore, when considered together with the results of FIG. 2, it is presumed that a high NO conversion ratio is obtained by the denitration catalyst including the V₂O₅ crystal phase and not including the CaV₂O₆ crystal phase.

### [Presence or Absence of Second Metal and NO Conversion Ratio (in the Absence of Water Vapor and in the Presence of SO₂)]

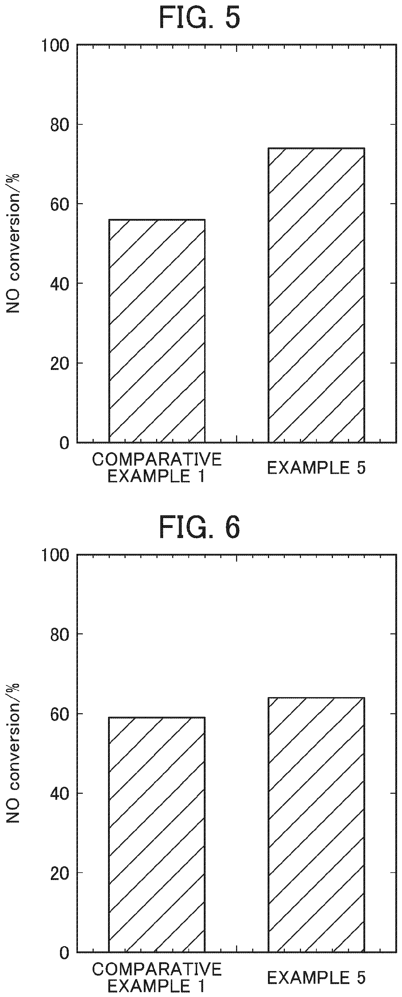

FIG. 5 is a graph comparing the NO conversion ratio of the denitration catalyst of Example 5 and the NO conversion ratio of the denitration catalyst of Comparative Example 1. The reaction temperature was set to 150°C, and a test was conducted by further adding 100 ppm of SO₂ to the reaction gas of "Dry" in FIG. 1. As shown in FIG. 5, it was confirmed that with the denitration catalyst of Example 5, a high NO conversion ratio was obtained as compared with the denitration catalyst of Comparative Example 1.

### [Presence or Absence of Second Metal and NO Conversion Ratio (in the Presence of Water Vapor and in the Presence of SO₂)]

FIG. 6 is a graph comparing the NO conversion ratio of the denitration catalyst of Example 5 and the NO conversion ratio of the denitration catalyst of Comparative Example 1. The reaction temperature was set to 172°C, and the test was performed by further adding 100 ppm of SO₂ to the reaction gas of "Wet" in FIG. 1. As shown in FIG. 6, it was confirmed that with the denitration catalyst of Example 5, a high NO conversion ratio could be obtained as compared with the denitration catalyst of Comparative Example 1.

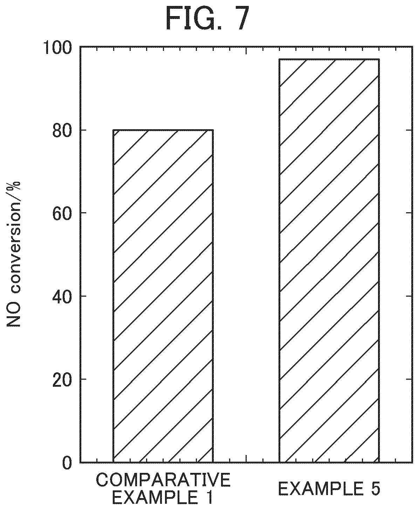

FIG. 7 is a graph comparing the NO conversion ratio of the denitration catalyst of Example 5 and the NO conversion ratio of the denitration catalyst of Comparative Example 1. In FIG. 7, the test was conducted under the same conditions as in FIG. 6 except that the reaction temperature was set to 200°C. As shown in FIG. 6, it was confirmed that with the denitration catalyst of Example 5, a high NO conversion ratio could be obtained as compared with the denitration catalyst of Comparative Example 1.

### [SO₂ Concentration and NO Conversion Ratio]

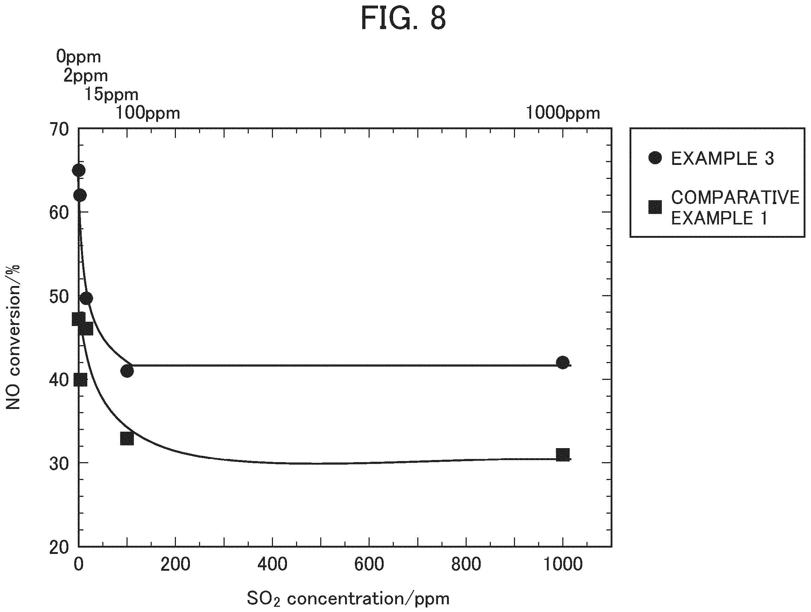

FIG. 8 is a graph comparing the NO conversion ratios of the denitration catalysts of Example 3 and Comparative Example 1 when the SO₂ concentration in the reaction gas was changed. The reaction temperature was set to 150°C and the test was conducted by further adding 0 ppm, 2 ppm, 15 ppm, 100 ppm, or 1,000 ppm of SO₂ to the reaction gas of "Wet" in FIG. 1. The vertical axis of FIG. 8 represents the NO conversion ratio, and the horizontal axis of FIG. 8 represents the SO₂ concentration in the reaction gas. As shown in FIG. 8, it was confirmed that the denitration catalyst of Example 3 achieved a higher NO conversion ratio than the denitration catalyst of Comparative Example 1, even when the SO₂ concentration was increased.

### [Content of Second Metal]

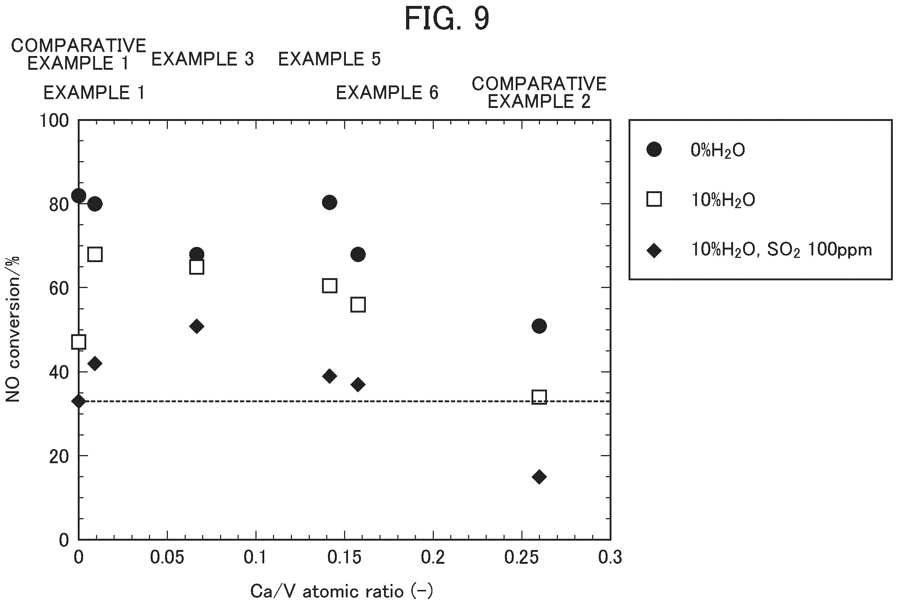

FIG. 9 is a graph showing a relationship between NO conversion ratios and component ratios of the denitration catalysts when Ca was used as the second metal. The horizontal axis in FIG. 9 represents a molar ratio of Ca to atom V in the vanadium oxide, corresponding to each of the Examples and Comparative Examples. The vertical axis in FIG. 9 represents the NO conversion ratio. The reaction temperature was set to 150°C. "0% H₂O" in FIG. 9 was under the same conditions as "Dry" in FIG. 1. Similarly, "10% H₂O" was under the same conditions as "Wet" in FIG. 1, and "10% H₂O, SO₂ 100 ppm" was under the same conditions as the reaction gas of "Wet" in FIG. 1 except that 100 ppm of SO₂ was further contained. As shown in FIG. 9, when the molar ratio of Ca to atom V in the vanadium oxide in the denitration catalyst was in the range of 0.0091 or more and less than 0.16, a high NO conversion ratio was obtained even in the presence of water vapor and SO₂.

### [XRD Measurement]

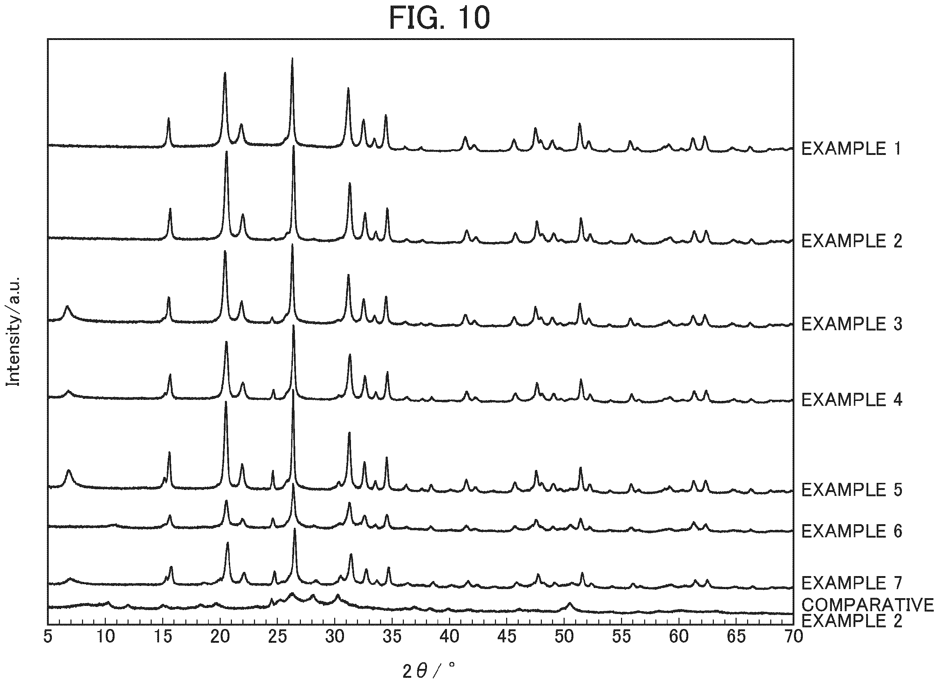

FIG. 10 is a chart showing XRD measurement results of the denitration catalysts of the respective Examples and Comparative Examples. As shown in FIG. 10, peaks derived from the V₂O₅ crystal phase were observed in all of the denitration catalysts of the Examples and the Comparative Examples. On the other hand, in the denitration catalyst of Comparative Example 2, peaks derived from the V₂O₅ crystal phase had low intensity and it is presumed that crystallinity was low.

### [Presence or Absence of Second Metal and Reaction Temperature and NO Conversion Ratio (in the Presence of SO₂)]

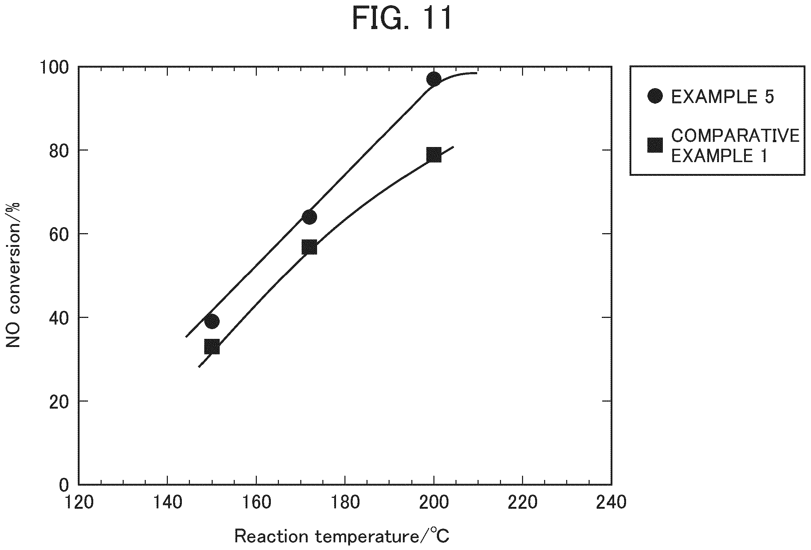

FIG. 11 is a graph showing a relationship between the reaction temperature and the NO conversion ratio of the denitration catalysts of Example 5 and Comparative Example 1. The vertical axis in the graph of FIG. 11 represents the NO conversion ratio, and the horizontal axis in the graph of FIG. 11 represents the reaction temperature. Other reaction conditions were such that 100 ppm of SO₂ was further contained in the reaction gas of "Wet" in FIG. 1. From the results of FIG. 11, it was confirmed that the denitration catalyst of Example 5 could achieve a higher NO conversion ratio than the denitration catalyst of Comparative Example 1 at least when the reaction temperature was 150°C to 200°C.

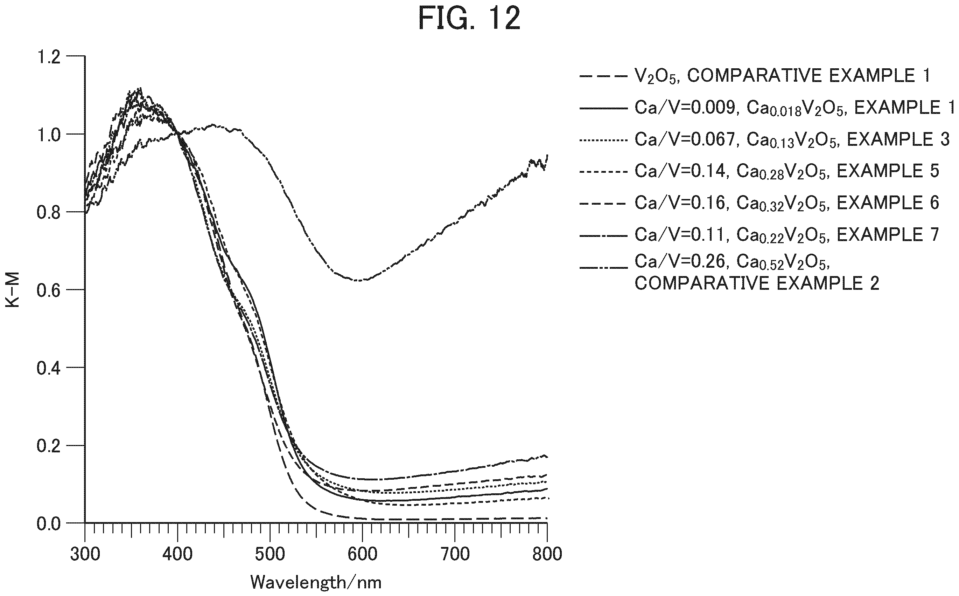

FIG. 12 is a graph of a denitration catalyst precursor having a composition of Ca_{0-0.52}V₂O₅, the graph being normalized by an absorption intensity at a wavelength of 400 nm. In FIG. 12, the vertical axis represents K-M function used in quantitative analyses, and the horizontal axis represents wavelength (nm). The diffuse reflectance UV-Vis spectrum was measured with an ultraviolet-visible near-infrared spectrophotometer (UV-3100PC, manufactured by Shimadzu Corporation). A ratio of a relative intensity (400 nm:700 nm) of the absorption intensity at 700 nm to the absorption intensity at 400 nm calculated from FIG. 12 was 1:0.010 in Comparative Example 1. The ratio (400 nm:700 nm) was 1:0.0498 in Example 5; 1:0.0662 in Example 1; 1:0.0860 in Example 3; 1:0.0996 in Example 6; and 1:0.768 in Comparative Example 2.

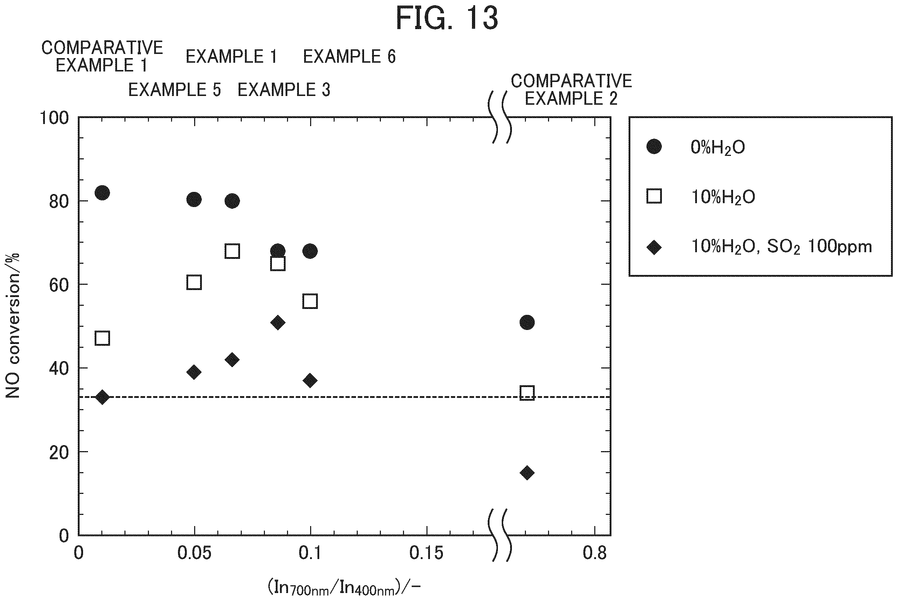

FIG. 13 is a graph obtained by collating the results of FIG. 12 with the results of FIG. 9. In FIG. 13, the vertical axis represents the NO conversion ratio (%), and the horizontal axis represents a relative proportion (700 nm/400 nm) of the absorption intensity at a wavelength 700 nm to the absorption intensity at a wavelength 400 nm. From the results of FIG. 13, it is clear that the ratio (400 nm:700 nm) is preferably 1:0.0498 to 1:0.14, more preferably 1:0.0498 to 1:0.12, and most preferably 1:0.0498 to 1:0.0996.

### [Type of Second Metal and Relative Activity]

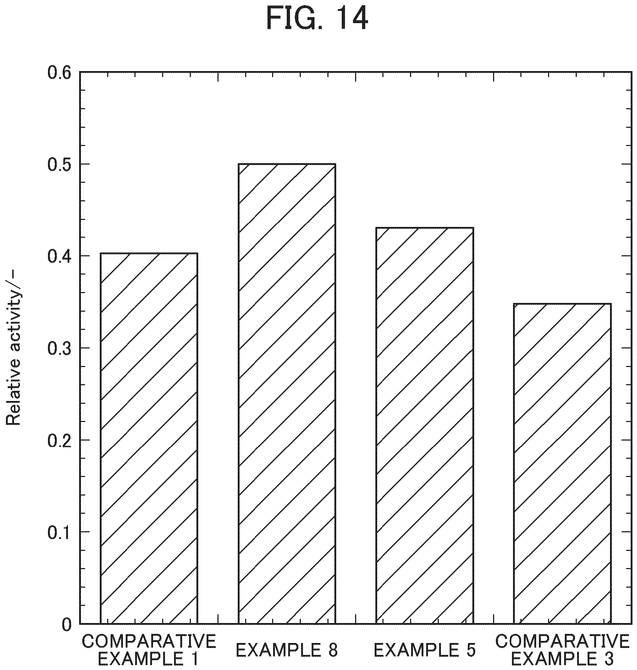

FIG. 14 is a graph comparing relative activities of the Examples and the Comparative Examples during the denitration reaction at 150°C. The relative activity is an index for evaluating the characteristics of the denitration catalyst under the conditions where water and SO₂ are contained as compared with those under the conditions where neither water nor SO₂ is contained, and represented by the following Formula (2). The conditions of "reaction gas containing neither SO₂ nor water" in the Formula (2) were set to the same conditions as the conditions of "dry" in FIG. 1. Similarly, the conditions of the "reaction gas containing SO₂ and water" were set to the same conditions as the reaction gas of "Wet" in FIG. 1, except that 100 ppm of SO₂ was further contained. Relative activity = (NO conversion ratio of reaction gas containing neither SO2 nor water)/ (NO conversion ratio of reaction gas containing SO2 and water) (2)

From the results of FIG. 14, it was confirmed that the relative activity of the denitration catalyst of each Example was higher than the relative activity of the denitration catalyst of each Comparative Example, and the denitration catalyst of each Example showed a higher NO conversion ratio under the condition that the reaction gas contained SO₂ and water.

## Claims

1. A denitration catalyst comprising a vanadium oxide and a second metal,
wherein the denitration catalyst comprises the vanadium oxide in an amount of 50% by mass or more in terms of vanadium pentoxide,
the second metal is at least one of Mg or Ca, and
a molar ratio of the second metal to atom V in the vanadium oxide is 0.0091 or more and less than 0.16.

2. The denitration catalyst according to claim 1, comprising a V₂O₅ crystal phase.

3. The denitration catalyst according to claim 1 or 2, wherein, in a diffuse reflectance UV-Vis spectrum normalized by the absorption intensity at 400 nm, a ratio of an absorption intensity at 400 nm to an absorption intensity at 700 nm (400 nm:700 nm) is 1:0.0498 to 1:0.14.

4. A method for producing the denitration catalyst according to any one of claims 1 to 3,
comprising calcining a precursor containing the vanadium oxide and the second metal at 260 to 340°C.

5. An exhaust gas denitration method, comprising contacting exhaust gas having a concentration of SO₂ of 1 ppm or more with the denitration catalyst according to any one of claims 1 to 3 to perform a denitration reaction.
